(19) Europäisches Patentamt / European Patent Office / Office européen des brevets

(11) **EP 3 101 146 A1**

(12) **EUROPEAN PATENT APPLICATION**
published in accordance with Art. 153(4) EPC

(43) Date of publication:
**07.12.2016 Bulletin 2016/49**

(51) Int Cl.:
**C22C 1/08** *(2006.01)* **H01M 4/80** *(2006.01)*

(21) Application number: **14881071.6**

(86) International application number:
**PCT/JP2014/083576**

(22) Date of filing: **18.12.2014**

(87) International publication number:
**WO 2015/114984 (06.08.2015 Gazette 2015/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.01.2014 JP 2014016665**
**26.09.2014 JP 2014196701**

(71) Applicant: **Sumitomo Electric Industries, Ltd.**
**Osaka-shi, Osaka 541 0041 (JP)**

(72) Inventors:
• **KIMURA, Koutarou**
**Osaka-shi**
**Osaka 554-0024 (JP)**
• **HOSOE, Akihisa**
**Osaka-shi**
**Osaka 554-0024 (JP)**

• **NISHIMURA, Junichi**
**Osaka-shi**
**Osaka 554-0024 (JP)**
• **OKUNO, Kazuki**
**Osaka-shi**
**Osaka 554-0024 (JP)**
• **GOTO, Kengo**
**Osaka-shi**
**Osaka 554-0024 (JP)**
• **SAKAIDA, Hideaki**
**Osaka-shi**
**Osaka 554-0024 (JP)**
• **MOTOMURA, Junichi**
**Osaka-shi**
**Osaka 554-0024 (JP)**

(74) Representative: **Boult Wade Tennant**
**Verulam Gardens**
**70 Gray's Inn Road**
**London WC1X 8BT (GB)**

(54) **CONDUCTIVE RESIN MOLDING, STRUCTURE, POROUS ALUMINUM BODY, PROCESS FOR MANUFACTURING POROUS ALUMINUM BODY, COLLECTOR, ELECTRODE, NONAQUEOUS ELECTRIC DOUBLE-LAYER CAPACITOR AND LITHIUM ION CAPACITOR**

(57) Provided is a conductive resin molded body that has a three-dimensional network structure and is suitable for producing an aluminum porous body in which the water adsorption amount is small. The conductive resin molded body includes a resin molded body having a three-dimensional network structure and a conductive layer at least containing carbon black and carboxymethylcellulose on the surface of the skeleton of the resin molded body. The conductive layer is preferably formed by applying a carbon coating material at least containing carbon black, carboxymethylcellulose, and water to the surface of the skeleton of the resin molded body and subsequently drying the carbon coating material; and the carbon coating material preferably has a viscosity of 100 mPa.s or more and 600 mPa·s or less.

FIG. 1A

EP 3 101 146 A1

## Description

Technical Field

The present invention relates to a conductive resin molded body, a structure, an aluminum porous body, a method for producing an aluminum porous body, a current collector, an electrode, a non-aqueous electric double layer capacitor, and a lithium ion capacitor.

Background Art

Metal porous bodies having a three-dimensional network structure are used in wideranging applications such as various filters, catalyst supports, and battery electrodes. For example, Celmet (registered trademark, manufactured by Sumitomo Electric Industries, Ltd.), which is a nickel porous body having a three-dimensional network structure (hereafter referred to as a "nickel porous body"), is used as an electrode material of batteries such as nickel-hydrogen batteries and nickel-cadmium batteries. Celmet is a metal porous body having interconnected pores and has a feature of having a higher porosity (90% or more) than other porous bodies such as metal non-woven fabric.

Such a nickel porous body is obtained by forming a nickel layer on the surface of the skeleton of a resin molded body having interconnected pores such as a urethane foam, subsequently performing heat treatment to decompose the resin foam molded body, and further performing nickel reduction treatment. The nickel layer is formed by coating the surface of the skeleton of the resin foam molded body with a carbon coating material or the like to perform conductive treatment, and subsequently performing electroplating to deposit nickel.

Like nickel, aluminum also has excellent features in terms of, for example, conductivity, corrosion resistance, and lightweight. In a battery application, for example, as the positive electrode of a lithium ion battery, an aluminum foil having a surface coated with an active material such as lithium cobalt oxide is used. In order to increase the capacity of such a positive electrode formed of aluminum, an aluminum porous body having a three-dimensional network structure with a large aluminum surface area (hereafter referred to as an "aluminum porous body") may be used and the active material may also be filled into the porous portion of the aluminum porous body. This is because, by using the aluminum porous body, even with a large electrode thickness, the active material can be held, resulting in an increase in the active material utilization ratio per unit area.

The aluminum porous body is produced by a method of subjecting a resin foam molded body having a three-dimensional network structure to aluminum plating. Patent Literature 1 describes an invention relating to a capacitor including, as an electrode, an aluminum porous body obtained by this plating method. According to the method described in Patent Literature 1, a porous resin molded body having a three-dimensional network structure can be uniformly plated with high-purity aluminum, to thereby produce a high-quality aluminum porous body.

Citation List

Patent Literature

PTL 1: Japanese Unexamined Patent Application Publication No. 2012-007233

Summary of Invention

Technical Problem

The above-described lithium ion battery and capacitor, which are electrochemical devices using non-aqueous electrolytes, need to be produced in environments from which water has been sufficiently removed. Accordingly, current collectors to be used as electrodes also need to be sufficiently dried. The aluminum porous body described in PTL 1 and used for a capacitor adsorbs a relatively large amount of water on the surface of the skeleton. Thus, in order to use the aluminum porous body as an electrode of such an electrochemical device using a non-aqueous electrolyte, the aluminum porous body needs to be sufficiently subjected to a drying step.

Accordingly, the inventors of the present invention performed thorough studies on how to reduce the water adsorption amount of the aluminum porous body. As a result, the inventors have newly found that, in the aluminum porous body that has a three-dimensional network structure and is produced by the existing plating method, a porous surface layer is formed for the hollow skeleton portion and this porous layer adsorbs water. The inventors of the present invention further studied the cause of formation of the porous layer. As a result, the inventors have found that the cause is the conductive carbon coating material used for imparting conductivity to the resin molded body having a three-dimensional network structure. In other words, it has been found that, when the existing carbon coating material is used, a smooth surface cannot be provided for the hollow skeleton portion of the aluminum porous body and the water adsorption amount cannot be reduced.

Accordingly, in consideration of the above-described newly found problem, an object of the present invention is to provide a conductive resin molded body that has a three-dimensional network structure and is suitable for producing an aluminum porous body in which the water adsorption amount is small.

Solution to Problem

In order to achieve the object, the present invention employs the following features. A conductive resin molded body according to the present invention is a conductive resin molded body including a resin molded body having a three-dimensional network structure and a conductive layer at least containing carbon black and carboxymethylcellulose on a surface of a skeleton of the resin molded body.

Advantageous Effects of Invention

The present invention can provide a conductive resin molded body that has a three-dimensional network structure and is suitable for producing an aluminum porous body in which the water adsorption amount is small.

Brief Description of Drawings

[Fig. 1A] Figure 1A is a photograph of a cross section of the skeleton of a conductive resin molded body 1 in an Example observed with an electron microscope (SEM).

[Fig. 1B] Figure 1B is a photograph of a cross section of the skeleton of a conductive resin molded body A in a Comparative Example observed with an electron microscope (SEM).

[Fig. 2A] Figure 2A is a photograph of a cross section of the skeleton of an aluminum porous body 1 in an Example observed with an electron microscope (SEM).

[Fig. 2B] Figure 2B is a photograph of a cross section of the skeleton of an aluminum porous body A in a Comparative example observed with an electron microscope (SEM).

[Fig. 3] Figure 3 is a schematic view of a structure example in which an aluminum porous body is applied to a lithium ion capacitor.

Description of Embodiments

Features of embodiments of the present invention will be firstly listed and described.

(1) A conductive resin molded body according to an embodiment of the present invention is a conductive resin molded body including a resin molded body having a three-dimensional network structure, and a conductive layer at least containing carbon black and carboxymethylcellulose on a surface of a skeleton of the resin molded body. Use of the conductive resin molded body according to (1) above enables production of an aluminum porous body that has a three-dimensional network structure in which the water adsorption amount is small. Specifically, in the aluminum porous body produced with such a conductive resin molded body according to an embodiment of the present invention, the hollow skeleton portion does not have a porous surface layer but has a smooth surface. As a result, the water adsorption amount is small.

(2) In the conductive resin molded body according to the embodiment of the present invention, the conductive layer is preferably formed by applying a carbon coating material at least containing carbon black, carboxymethylcellulose, and water to the surface of the skeleton of the resin molded body and subsequently drying the carbon coating material, and the carbon coating material preferably has a viscosity of 100 mPa·s or more and 600 mPa·s or less. The carbon coating material having a viscosity of 100 mPa·s or more and 600 mPa·s or less is suitable for forming a uniform-thickness coating film on the surface of the skeleton of the resin molded body having a three-dimensional network structure. Thus, a conductive resin molded body produced with a carbon coating material having such a viscosity has a uniform conductive layer on the surface of the skeleton and can be suitably used as a base member for forming an aluminum porous body.

(3) In the conductive resin molded body according to the embodiment of the present invention, the conductive layer of the conductive resin molded body preferably has a coating weight per unit area of 0.70 g/m$^2$ or more and 7.0 g/m$^2$ or less. In the conductive resin molded body, when the conductive layer has a coating weight per unit area of 0.70 g/m$^2$ or more and 7.0 g/m$^2$ or less, sufficient conductivity is imparted to the surface of the skeleton of the conductive resin molded body. Thus, the conductive resin molded body can be suitably used as a base member for forming an aluminum porous body. Incidentally, in the conductive resin molded body according to the embodiment of the present invention, the coating weight per unit area of the conductive layer is defined as the mass of the conductive layer calculated in terms of a resin molded body having a three-dimensional network structure having a porosity of 80 to 98%, a specific surface area (surface area per unit volume) of 1 $m^2/m^3$, a thickness of 1 mm, and an apparent area of 1 $m^2$.

(4) A structure according to an embodiment of the present invention is a structure including the conductive resin molded body according to any one of (1) to (3) above and an aluminum film on a surface of a skeleton of the conductive resin molded body. In the structure according to (4) above, removal of the conductive resin molded body inside the aluminum film enables production of an aluminum porous body in which the hollow skeleton portion does not have a porous surface layer.

(5) An aluminum porous body according to an embodiment of the present invention is an aluminum porous body obtained by removing the conductive resin molded body from the structure according to (4) above. In the aluminum porous body according to (5) above, the hollow skeleton portion does not have a porous surface layer but has a smooth surface so that the water adsorption amount is small. For this reason, when the aluminum porous body is used as an electrode of an electricity storage device using a non-aqueous electrolyte, the load of the drying step can be reduced.

(6) A method for producing an aluminum porous body according to an embodiment of the present invention is a method for producing an aluminum porous body, the method including a step of forming an aluminum film on a surface of the conductive resin molded body according to any one of (1) to (3) above by molten-salt electrolytic plating to produce a structure, and a step of removing the conductive resin molded body from the structure. The method for producing an aluminum porous body according to (6) above enables production of an aluminum porous body in which the hollow skeleton portion does not have a porous surface layer and the water adsorption amount is small.

(7) A current collector according to an embodiment of the present invention is a current collector including the aluminum porous body according to (5) above. In the current collector according to (7) above, the water adsorption amount is small. Accordingly, during production of an electrode for an electricity storage device using a non-aqueous electrolyte, the load of the drying step can be reduced.

(8) An electrode according to an embodiment of the present invention is an electrode including the aluminum porous body according to (5) above as a current collector. The electrode according to (8) above includes, as the current collector, the aluminum porous body according to the embodiment of the present invention in which the water adsorption amount is small. Accordingly, during production of an electricity storage device using a non-aqueous electrolyte, the load of the drying step can be reduced.

(9) A non-aqueous electric double layer capacitor according to an embodiment of the present invention is a non-aqueous electric double layer capacitor including the electrode according to (8) above. During production of the electric double layer capacitor according to (9) above, the load of drying the electrode is reduced. Accordingly, the production cost is reduced in the non-aqueous electric double layer capacitor.

(10) A lithium ion capacitor according to an embodiment of the present invention is a lithium ion capacitor including the electrode according to (8) above. During the production of the lithium ion capacitor according to (10) above, the load of drying the electrode is reduced. Accordingly, the production cost is reduced in the lithium ion capacitor.

[Details of Embodiments of the Present Invention]

Hereinafter, specific examples of a conductive resin molded body and the like according to embodiments of the present invention will be described. Note that the scope of the present invention is not limited to these examples, is indicated by Claims, and is intended to embrace all the modifications within the meaning and range of equivalency of the Claims.

<Resin Molded Body>

As described above, a conductive resin molded body according to an embodiment of the present invention is a conductive resin molded body including a resin molded body having a three-dimensional network structure and a conductive layer at least containing carbon black and carboxymethylcellulose on the surface of the skeleton of the resin molded body. The conductive layer, which contains carbon black and carboxymethylcellulose, may further contain other components intentionally for various purposes or as unavoidable impurities. Examples of the other components contained include a dispersing agent, a wetting agent, and a preservative.

The conductive resin molded body according to an embodiment of the present invention can be obtained by applying a carbon coating material to the surface of the skeleton of a resin molded body having a three-dimensional network structure and by subsequently performing drying to remove water from the carbon coating material. The carbon coating material, which contains at least carbon black, carboxymethylcellulose, and water, may further contain other components intentionally for various purposes or as unavoidable impurities. The method of applying the carbon coating material to the surface of the skeleton of the resin molded body is not particularly limited. For example, the carbon coating material can be applied by immersing the resin molded body in the carbon coating material.

The conductive layer formed on the surface of the skeleton of the conductive resin molded body according to an embodiment of the present invention is a conductive layer having higher resistance to the plating solution for performing aluminum molten-salt electrolytic plating than a conductive layer formed with an existing carbon coating material. Accordingly, when the conductive resin molded body according to an embodiment of the present invention is immersed in the plating solution, the conductive layer formed at the surface of the conductive resin molded body tends not to be eroded by the plating solution. This is probably the reason why the hollow skeleton portion of the aluminum porous body has not a porous layer but a smooth surface.

The existing carbon coating material contains polyolefin as a binder component. The polyolefin is used in the form of particles and at least some gaps are probably formed between the particles. Accordingly, when a resin molded body having been subjected to conductive treatment with the existing carbon coating material is subjected to aluminum plating, the plating solution probably enters the gap portions of the conductive layer, resulting in electrodeposition of aluminum. Thus, a porous layer tends to be formed for the hollow skeleton portion of the aluminum porous body. In addition, polyolefin has low resistance to erosion in the aluminum plating solution, so that immersing, in the plating solution, the resin molded body having been subjected to conductive treatment causes dissolution of the surface of the conductive layer, resulting in formation of uneven gaps. This is also probably the cause of formation of the porous layer.

In contrast, the carbon coating material used for producing a conductive resin molded body according to an embodiment of the present invention, contains carboxymethylcellulose as a binder component. This carboxymethylcellulose is watersoluble and hence the gaps conventionally formed are probably not formed. Accordingly, when the conductive resin molded body according to an embodiment of the present invention is subjected to aluminum plating, since the conductive layer has no gaps, the porous layer tends not to be formed for the hollow skeleton portion of the aluminum porous body. In addition, the conductive layer containing carboxymethylcellulose has high erosion resistance to the aluminum plating solution and immersion of the conductive resin molded body in the plating solution does not cause dissolution of the conductive layer in the plating solution. This is also probably the reason why the porous layer tends not to be formed. In addition, the conductive layer formed on the surface of the skeleton of the conductive resin molded body according to an embodiment of the present invention has a lower electric resistance than the conductive layer formed with the existing carbon coating material. This facilitates molten-salt electrolytic plating of the conductive resin molded body.

In the carbon coating material, carbon black is a component for imparting conductivity; carboxymethylcellulose is a component functioning as a binder; and water is a component for adjusting the viscosity of the carbon coating material. The mixing ratio of the carbon black to the carboxymethylcellulose is not particularly limited as long as, after removal of water from the coated surface of the resin molded body, carbon black is contained such that the conductive resin molded body has sufficient conductivity. For example, the carbon coating material preferably has a mass ratio of carbon black to carboxymethylcellulose of about 100:10 to about 100:50. In the ratio, by increasing the mass proportion of carboxymethylcellulose, the binder function (binding strength) can be sufficiently provided so as not to cause separation of the conductive layer from the resin molded body. An excessively high proportion of carboxymethylcellulose results in low conductivity. Accordingly, the carboxymethylcellulose content by mass is preferably half or less of the carbon black content. The water content is not particularly limited and is set such that the carbon coating material has an appropriate viscosity.

For example, the carbon coating material contains carbon black in an amount of 10.0% by mass or more and 13.6% by mass or less, carboxymethylcellulose in an amount of 1.0% by mass or more and 5.0% by mass or less, and optionally additives, the balance being water.

The carbon black is not particularly limited as long as it is amorphous and has conductivity. Preferred examples of carbon black include oil furnace, Ketjenblack, and acetylene black. The carbon black is not particularly limited in terms of particle size and preferably has an average primary particle size of about 10 nm to about 100 nm.

Examples of the carboxymethylcellulose include ammonium-based carboxymethylcellulose, sodium-based carboxymethylcellulose, and calcium-based carboxymethylcellulose.

The material for the resin molded body having a three-dimensional network structure is not particularly limited and a desired resin can be selected. An example of the material is a resin foam molded body formed of, for example, polyurethane, melamine, polypropylene, or polyethylene. Although the term "resin foam molded body" is used, a resin molded body having a desired shape can be selected as long as it has a continuous pore (interconnected pores). For example, an article formed by entangling resin fibers so as to have a shape like non-woven fabric may also be used instead of the resin foam molded body.

Urethane foam and melamine foam, which have high porosity, have interconnected pores, and are easily decomposed by heat, are preferably used as the resin molded body. In particular, urethane foam is preferred from the standpoint of, for example, pore uniformity and ease of availability and also from the standpoint of availability of urethane foam having a small pore diameter. Note that resin foam molded bodies, which often contain residue such as a foaming agent and unreacted monomers derived from the foam production process, are preferably subjected to washing treatment.

The resin molded body has a skeleton of a three-dimensional network structure to thereby have a continuous pore throughout the body. The skeleton of a urethane foam has a substantially triangular cross section perpendicular to the direction in which the skeleton extends. The resin molded body preferably has a porosity of 80% to 98% and a pore diameter of 50 $\mu$m to 1000 $\mu$m.

The porosity of the resin molded body is defined by the following formula.

$$\text{Porosity} = (1 - (\text{weight of resin molded body [g]}/(\text{volume of resin molded body} [\text{cm}^3] \times \text{material density of resin molded body}))) \times 100 [\%]$$

The pore diameter is determined in the following manner: the surface of the resin molded body is magnified with a micrograph or the like; the number of pores per inch (25.4 mm) is counted as the number of cells; and calculation by average pore diameter = 25.4 mm/number of cells is performed to determine the average value.

As described above, a conductive resin molded body according to an embodiment of the present invention can be produced by applying the carbon coating material to the surface of the skeleton of the resin molded body and drying the carbon coating material. The carbon coating material at least contains carbon black, carboxymethylcellulose, and water. The carbon coating material preferably has a viscosity of 100 mPa·s or more and 600 mPa·s or less. The carbon coating material having a viscosity in such a range facilitates uniform application of the carbon coating material to the surface of the skeleton of the resin molded body having a three-dimensional network structure. In other words, the carbon coating material can be prepared so as to have a viscosity of 100 mPa·s or more, so that it has the viscosity sufficient for forming a coating film of the carbon coating material on the surface of the skeleton of the resin molded body. And, the carbon coating material can be prepared so as to have a viscosity of 600 mPa·s or less, so that the carbon coating material is prevented from having an excessively high viscosity and the resin molded body immersed in the carbon coating material is prevented from being broken. From such viewpoints, the carbon coating material more preferably has a viscosity of 200 mPa·s or more and 600 mPa·s or less, still more preferably 300 mPa·s or more and 500 mPa·s or less. The viscosity of the carbon coating material can be adjusted by changing the water content.

As described above, in a conductive resin molded body according to an embodiment of the present invention, the conductive layer preferably has a coating weight per unit area of 0.70 g/m$^2$ or more and 7.0 g/m$^2$ or less. When the conductive layer is formed with a coating weight per unit area of 0.70 g/m$^2$ or more, a conductive resin molded body having sufficient conductivity can be obtained. When the conductive layer is formed with a coating weight per unit area of 7.0 g/m$^2$ or less, the porous portion of the resin molded body can be prevented from being clogged. When a large area of the porous portion of the resin molded body is clogged, plating with aluminum causes deposition of aluminum also on the clogged area, resulting in a decrease in the porosity of the porous body. When a large area of the porous portion is clogged and the aluminum porous body is used as an electrode of an electricity storage device, for example, the clogged area cannot be filled with the active material, which causes degradation of the performance of the electricity storage device. In the conductive resin molded body, the conductive layer more preferably has a coating weight per unit area of 1.4 g/m$^2$ or more and 4.2 g/m$^2$ or less, still more preferably 2.2 g/m$^2$ or more and 3.5 g/m$^2$ or less. The coating weight per unit area of the conductive layer can be adjusted by changing the carbon coating material or the coating method.

<Structure>

A structure according to an embodiment of the present invention is a structure including the conductive resin molded body and an aluminum film on the surface of the skeleton of the conductive resin molded body. The conductive resin molded body is removed from the structure, to thereby produce an aluminum porous body in which the hollow skeleton portion does not have a porous surface layer.

<Aluminum Porous Body>

An aluminum porous body according to an embodiment of the present invention can be obtained by removing the conductive resin molded body from the structure. In this aluminum porous body, the hollow skeleton portion does not have a porous surface layer but has a smooth surface. As a result, the water adsorption amount is small. Accordingly, the aluminum porous body is used as an electrode of an electricity storage device containing a non-aqueous electrolyte, so that the load of the drying step can be reduced.

<Method for Producing Aluminum Porous Body>

A method for producing an aluminum porous body according to an embodiment of the present invention includes a step of forming an aluminum film on the surface of the conductive resin molded body by molten-salt electrolytic plating to produce a structure, and a step of removing the conductive resin molded body from the structure.

Hereinafter, the steps will be described in detail.

-Step of Forming Aluminum Plating Film-

In this step, electrolytic plating is performed in molten salt to form an aluminum film on the surface of the conductive resin molded body. Formation of the aluminum plating film in a molten-salt bath enables a uniform and thick aluminum film to be formed even on the surface of the skeleton of a molded body having a complex skeleton structure, that is, a conductive resin molded body having a three-dimensional network structure. The molten-salt electrolytic plating can be performed by applying a direct current between the conductive resin molded body as the negative electrode and aluminum as the positive electrode in a molten salt.

The molten salt may be an organic molten salt that is a eutectic salt of an organohalide and an aluminum halide. By using an organic-molten-salt bath that melts at a relatively low temperature, electrolytic plating can be performed without decomposing the conductive resin molded body as the base member. Examples of the organohalide include an imidazolium salt and a pyridinium salt. The molten-salt bath is preferably a nitrogen-containing molten-salt bath and is preferably the imidazolium-salt bath. The imidazolium salt is preferably a salt containing an imidazolium cation having alkyl groups at the 1 and 3 positions. More specifically, the most preferred is a molten salt of aluminum chloride and 1-ethyl-3-methylimidazolium chloride (EMIC), which has high stability and tends not to decompose. For the pyridinium salt, preferred is a molten salt of aluminum chloride and butylpyridinium chloride (BPC).

Entry of water or oxygen into the molten salt causes degradation of the molten salt. For this reason, plating is preferably performed under the atmosphere of an inert gas such as nitrogen or argon and also in a sealed environment. The molten-salt bath may have a temperature of 10°C to 100°C, preferably 25°C to 45°C. As the temperature decreases, the current-density range enabling plating narrows and it becomes difficult to plate the whole surface of the skeleton of the conductive resin molded body. Plating can be performed in the range of 100°C or less to avoid the disadvantage of loss of the shape of the conductive resin molded body as the base member. The step having been described can provide a structure including an aluminum film at the surface and the conductive resin molded body as the core of the skeleton.

-Step of Removing Conductive Resin Molded Body-

The structure obtained in the above-described manner is subjected to a heat treatment of heating at a resin decomposition temperature of 370°C or more, preferably 500°C or more, in a nitrogen atmosphere or in air, for example. Thus, the resin and the conductive layer are burned off to provide an aluminum porous body. In the aluminum porous body thus obtained, the hollow skeleton portion does not have a porous surface layer. Accordingly, in the aluminum porous body, the water adsorption amount is small.

<Current Collector and Electrode>

A current collector according to an embodiment of the present invention is a current collector including the aluminum porous body according to an embodiment of the present invention. An electrode according to an embodiment of the present invention is an electrode using the aluminum porous body according to an embodiment of the present invention as the current collector. The current collector and the electrode can be used for an electricity storage device. The electricity storage device is not particularly limited. However, as described above, in the aluminum porous body according to an embodiment of the present invention, the water adsorption amount is small; hence use of the aluminum porous body for an electricity storage device using a non-aqueous electrolyte enables reduction in the load of the drying step. Examples of the electricity storage device include lithium batteries (including lithium ion secondary batteries, for example), non-aqueous electric double layer capacitors, and lithium ion capacitors.

<Non-Aqueous Electric Double Layer Capacitor>

A non-aqueous electric double layer capacitor according to an embodiment of the present invention has a configuration in which two electrodes according to the above-described embodiment of the present invention are used as a pair, a separator is disposed between these electrodes, and the separator is impregnated with a non-aqueous electrolyte.

The separator may be a known or commercially available separator, for example, preferably an insulating membrane formed of polyolefin, polyethylene terephthalate, polyamide, polyimide, cellulose, or glass fiber, for example. The separator normally has an average pore diameter of, but not particularly limited to, about 0.01 to about 5 $\mu$m, and normally has an average thickness of about 10 to about 150 $\mu$m.

The non-aqueous electrolyte may be a known or commercially available electrolyte. Examples of the non-aqueous electrolyte include an ethylene carbonate (EC)/diethyl carbonate (DEC) solution containing lithium hexafluorophosphate dissolved therein, a propylene carbonate solution containing tetraalkylphosphonium tetrafluoroborate dissolved therein, a propylene carbonate solution or sulfolane solution containing tetraalkylammonium tetrafluoroborate dissolved therein, and a propylene carbonate solution containing triethylmethylammonium tetrafluoroborate dissolved therein. Use of such an electrolyte enables an increase in the electrostatic capacity.

-Method for Producing Electrode for Non-Aqueous Electric Double Layer Capacitor-

An electrode for a non-aqueous electric double layer capacitor can be produced by using the aluminum porous body according to an embodiment of the present invention as the current collector and filling the porous portion of the aluminum porous body with active carbon. As the method of filling active carbon into the current collector, for example, active-carbon slurry may be filled by, for example, a known method such as the injection method.

The active-carbon slurry, which contains active carbon and a solvent, is not limited in terms of the mixing proportions of active carbon and the solvent. The solvent is not limited and is, for example, a polyvinyl alcohol aqueous solution serving as a thickener or an aqueous solvent binder such as a fluororesin dispersion. When polytetrafluoroethylene, polyvinyl alcohol, or the like is used as the binder, water may be used as the solvent. When an aqueous solvent is used, a neutral surfactant such as a polyether surfactant is preferably added in an amount of 0.1 to 0.5% by weight in order to enhance the filling capability into the current collector. Optionally, additives such as a conductive aid and a binder may be contained. In another usable example, polyvinylidene fluoride as a binder is dissolved in N-methyl-2-pyrrolidone, which is an organic solvent.

The method of filling the current collector with the active-carbon slurry is, for example, a method of immersing the current collector in the active-carbon slurry and optionally reducing the pressure, or a method of using a pump or the like to apply pressure to fill the active-carbon slurry through one side of the current collector. Use of the above-described surfactant enables the active-carbon slurry to be filled into the current collector by just immersing the current collector in the active-carbon slurry.

After the current collector is filled with the active-carbon slurry, drying treatment is preferably performed to remove the solvent from the slurry. Optionally, after filling with the active-carbon slurry is performed, compression-shaping is preferably performed by pressing with a roller press or the like. The thicknesses before and after the compression are not limited. The current collector before the compression normally has a thickness of 300 $\mu$m to 1500 $\mu$m, preferably 400 $\mu$m to 1200 $\mu$m. The current collector after the compression-shaping normally has a thickness of about 150 $\mu$m to about 700 $\mu$m, preferably about 200 $\mu$m to about 600 $\mu$m.

The electrode may be equipped with a lead terminal. The lead terminal may be attached by welding or coating with an adhesive.

<Lithium Ion Capacitor>

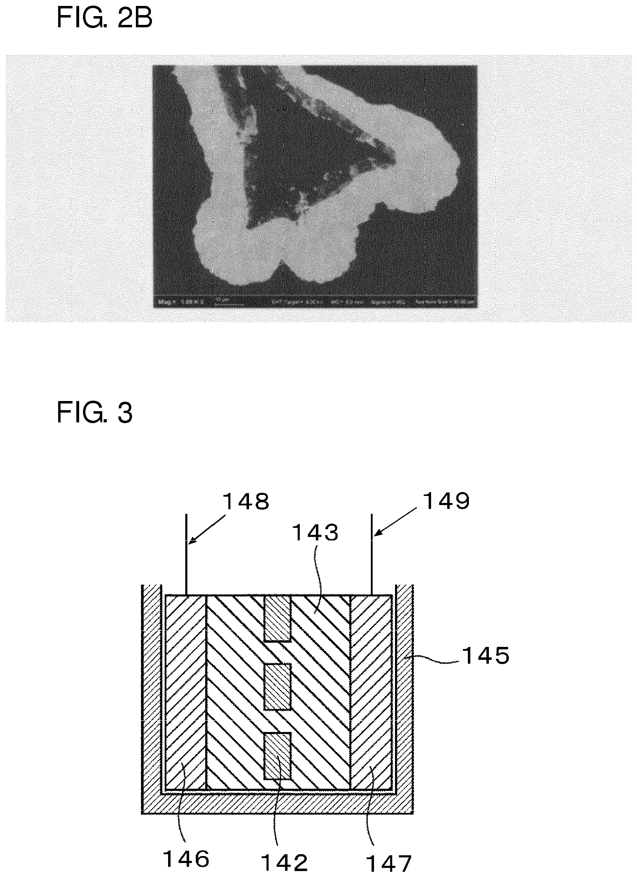

Figure 3 is a schematic sectional view illustrating an example of a lithium ion capacitor using an electrode material for a lithium ion capacitor. In a non-aqueous electrolyte 143 partitioned with a separator 142, an electrode material in which a positive electrode active material is held on an aluminum porous body is disposed as a positive electrode 146, and an electrode material in which a negative electrode active material is held on a current collector is disposed as a negative electrode 147. The positive electrode 146 and the negative electrode 147 are respectively connected to leads 148 and 149, and the whole structure is contained within a case 145. By using the aluminum porous body as a current collector, the current collector has a large surface area; and even a thin coating of active carbon as the active material can provide a high-output and high-capacity lithium ion capacitor.

-Positive Electrode for Lithium Ion Capacitor-

In order to produce a positive electrode for a lithium ion capacitor, a current collector constituted by the aluminum porous body is filled with active carbon as the active material. The active carbon is used in combination with a conductive aid and a binder. In order to increase the capacity of the lithium ion capacitor, the amount of active carbon as the main component is preferably large and the composition ratio of active carbon after dry (after removal of solvent) is preferably 90% or more. The conductive aid and the binder are necessary but cause a decrease in the capacity; and the binder further causes an increase in the internal resistance. For this reason, the amounts of the conductive aid and the binder are preferably minimized. The amount of conductive aid is preferably 10% by mass or less, and the amount of binder is preferably 10% by mass or less.

As the surface area of active carbon increases, the capacity of the lithium ion capacitor increases. Accordingly, active carbon preferably has a specific surface area of 1000 $m^2/g$ or more. The active carbon may be prepared from, for example, plant materials such as coconut husks and petroleum materials. In order to increase the surface area of active carbon, active carbon is preferably activated with steam or alkali. The conductive aid may be Ketjenblack, acetylene black, carbon fiber, or a composite material of the foregoing. Examples of the binder include polyvinylidene fluoride, polytetrafluoroethylene, polyvinyl alcohol, carboxymethylcellulose, and xanthan gum. As the solvent, water or an organic solvent may be appropriately selected depending on the type of binder. As the organic solvent, N-methyl-2-pyrrolidone is often used. Alternatively, when water is used as the solvent, a surfactant may be used in order to enhance the filling capability.

The electrode material containing active carbon as the main component is mixed and stirred to prepare an active-carbon slurry. The active-carbon slurry is filled into a current collector constituted by the aluminum porous body and dried; and optionally compression with a roller press or the like is performed to increase the density. This provides a positive electrode for a lithium ion capacitor.

-Filling Aluminum Porous Body with Active Carbon-

Filling with active carbon can be performed by, for example, a known method such as the immersion filling method or the coating method. Examples of the coating method include roll coating, applicator coating, electrostatic coating, powder coating, spray coating, spray coater coating, bar coater coating, roll coater coating, dip coater coating, doctor blade coating, wire bar coating, knife coater coating, blade coating, and screen printing.

In filling with active carbon, for example, active carbon is optionally mixed with a conductive aid or a binder, and is mixed with an organic solvent or water to prepare a positive electrode mixture slurry (active-carbon slurry). This slurry is filled into an aluminum porous body by the above-described method. Examples of the conductive aid include carbon black such as acetylene black (AB) or Ketjenblack (KB) and carbon fiber such as carbon nanotubes (CNT). Examples of the binder include polyvinylidene fluoride (PVDF), polytetrafluoroethylene (PTFE), polyvinyl alcohol (PVA), carboxymethylcellulose (CMC), and xanthan gum.

As the organic solvent used for preparing the positive electrode mixture slurry, a solvent that does not adversely affect materials to be filled into the aluminum porous body (specifically, the active material, the conductive aid, the binder, and optionally solid electrolyte) can be appropriately selected. Examples of such organic solvents include n-hexane, cyclohexane, heptane, toluene, xylene, trimethylbenzene, dimethyl carbonate, diethyl carbonate, ethylmethyl carbonate, propylene carbonate, ethylene carbonate, butylene carbonate, vinylene carbonate, vinylethylene carbonate, tetrahydrofuran, 1,4-dioxane, 1,3-dioxolane, ethylene glycol, and N-methyl-2-pyrrolidone. Alternatively, when water is used as the solvent, a surfactant may be used in order to enhance the filling capability.

-Negative Electrode for Lithium Ion Capacitor-

A negative electrode for a lithium ion capacitor is not particularly limited and an existing negative electrode for a lithium battery is usable. However, an existing electrode using a copper foil as the current collector has a low capacity. Accordingly, preferred is an electrode in which a copper or nickel porous body having a three-dimensional network structure is filled with active material. In order to enable operation as a lithium ion capacitor, the negative electrode is preferably doped with lithium ions in advance. The doping method may be a known method. Examples of the method include a method in which the negative electrode with a lithium metal foil thereon is immersed in an electrolyte to achieve doping; a method in which an electrode equipped with lithium metal is disposed within a lithium ion capacitor and, after assembly of the cell, current is passed between the negative electrode and the lithium metal electrode to achieve electrical doping; and a method in which a negative electrode and lithium metal are used to assemble an electrochemical cell and the negative electrode electrically doped with lithium is taken out and used. In any of the methods, in order to sufficiently decrease the potential of the negative electrode, the doping amount with lithium is preferably large. However, when the remaining capacity of the negative electrode is lower than the capacity of the positive electrode, the capacity of the lithium ion capacitor decreases. Accordingly, the amount corresponding to the capacity of the positive electrode is preferably left without doping.

-Electrolyte Used for Lithium Ion Capacitor-

An electrolyte used for a lithium ion capacitor can be the same as a non-aqueous electrolyte used for a lithium battery. The non-aqueous electrolyte may be a polar aprotic organic solvent. Specific examples include ethylene carbonate (EC), diethyl carbonate (DEC), dimethyl carbonate, propylene carbonate, $\gamma$-butyrolactone, and sulfolane. Examples of the supporting electrolyte used include lithium tetrafluoroborate, lithium hexafluorophosphate, and imide salts.

-Production of Lithium Ion Capacitor-

The positive electrode obtained in the above-described manner is blanked out so as to have an appropriate size and disposed so as to face a negative electrode with a separator therebetween. The negative electrode may be a negative electrode doped with lithium ions by the above-described method. When the method of performing doping after assembly of the cell is employed, an electrode connected to lithium metal is placed within the cell. The separator is preferably a porous membrane or non-woven fabric formed of cellulose, a polyolefin resin, or the like. Placement into a cell case is performed with a necessary spacer and impregnation with an electrolyte is performed. Finally, a lid is placed on the case with an insulating gasket therebetween to seal the opening. Thus, a lithium ion capacitor can be produced.

In order to minimize the water content within the lithium ion capacitor, materials such as electrodes are preferably sufficiently dried. The production of the lithium ion capacitor may be performed in an environment having a low water content and the sealing may be performed in an environment under reduced pressure. Note that as long as the aluminum porous body according to an embodiment of the present invention is used as the current collector, the other configuration of the lithium ion capacitor is not particularly limited and may be produced by other methods.

EXAMPLES

Hereinafter, the present invention will be described further in detail with reference to Examples. However, these Examples are examples and conductive resin molded bodies and the like according to the present invention are not limited to the Examples. The scope of the present invention is indicated by Claims and embraces all the modifications within the meaning and range of equivalency of the Claims.

[Example 1]

(Preparation of Resin Molded Body)

A resin molded body having a three-dimensional network structure prepared was a urethane foam having a porosity of 96%, 46 cells/inch, a pore diameter of about 550 $\mu$m, and a thickness of 1.0 mm. This foam was cut so as to have sides of 100 mm x 100 mm.

(Production of Carbon Coating Material 1)

A carbon coating material 1 was produced by mixing so as to contain 13% by mass of oil furnace, 1.1% by mass of carboxymethylcellulose, 85% by mass of water, and 0.9% by mass of a dispersing agent as an additive. The oil furnace had an average primary particle size of 20 nm. As the carboxymethylcellulose, ammonium-based carboxymethylcellulose was used. The resultant carbon coating material 1 had a viscosity of 490 mPa·s.

-Production of Conductive Resin Molded Body 1-

The urethane foam was immersed in the carbon coating material 1, withdrawn, and then dried at 120°C for 1 minute to produce a conductive resin molded body 1. In the conductive resin molded body 1, the conductive layer had a coating weight per unit area of 2.2 g/m$^2$.

(Observation of Cross Section of Skeleton of Conductive Resin Molded Body 1)

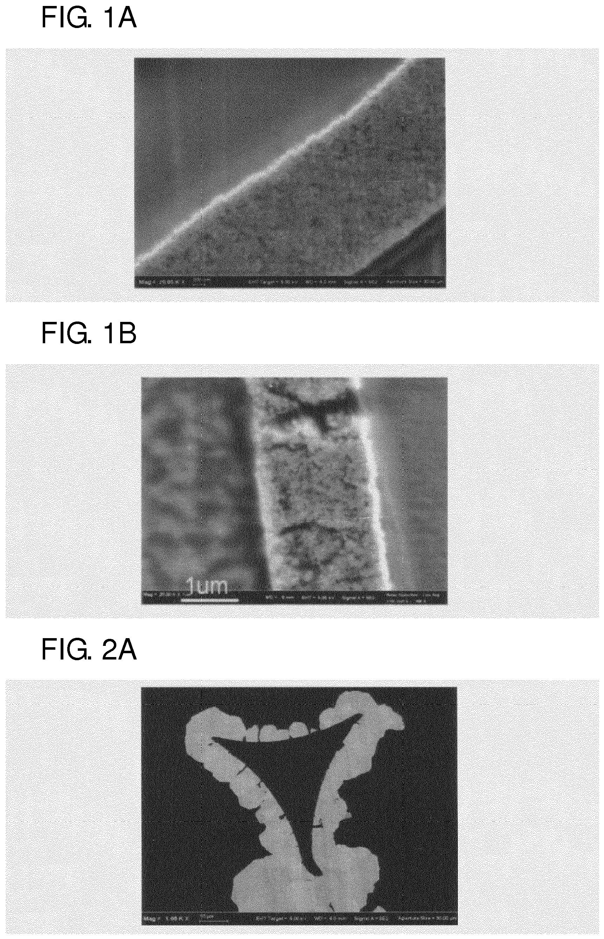

A cross section of the skeleton of the conductive resin molded body 1 obtained above was observed with an electron microscope (SEM). The result is shown in Fig. 1A. As shown in Fig. 1A, a dense conductive layer was uniformly formed on the surface of the skeleton of the conductive resin molded body 1, that is, on the surface of the urethane foam.

-Production of Aluminum Porous Body 1-

The conductive resin molded body 1 was used to produce an aluminum porous body 1 in the following manner.

(Molten-Salt Electrolytic Plating)

The conductive resin molded body 1 was set as a workpiece on a jig having a power supply function, then placed into a glove box having an argon atmosphere with a low water content (dew point: -30°C or less), and immersed in a molten-salt aluminum plating bath (33 mol% EMIC-67 mol% AlCl$_3$) at 40°C. The jig on which the workpiece was set was connected to the negative electrode side of a rectifier. An aluminum plate (purity: 99.99% by mass) as a counter electrode was connected to the positive electrode side of the rectifier. A direct current at a current density of 6.5 A/dm$^2$ was applied for 20 minutes to perform plating. In the resultant structure 1, an aluminum film having a mass of 140 g/m$^2$ was formed on the surface of the skeleton of the conductive resin molded body 1. Stirring was performed with a Teflon (registered trademark) rotor on a stirrer. Note that the current density is a value calculated on the basis of the apparent area of the conductive resin molded body 1.

(Removal of Conductive Resin Molded Body 1)

The structure 1 obtained above was withdrawn from the molten-salt aluminum plating bath, washed with water, and then heat-treated in air at 610°C for 20 minutes. As a result, the conductive resin molded body 1 was burned off to provide an aluminum porous body 1.

(Observation of Cross Section of Skeleton of Aluminum Porous Body 1)

A cross section of the skeleton of the aluminum porous body 1 obtained above was observed with an electron microscope (SEM). The result is shown in Fig. 2A. As shown in Fig. 2A, the hollow skeleton portion of the aluminum porous body 1 substantially did not have a porous surface layer.

(Measurement of Water Adsorption Amount of Aluminum Porous Body 1)

The water adsorption amount of the aluminum porous body 1 was measured by Karl-Fischer coulometric titration. For the measurement, the aluminum porous body 1 was cut to prepare five test pieces having sides of 10 mm x 50 mm. These test pieces were sufficiently dried by heat-treatment for 10 minutes in a nitrogen gas atmosphere at 300°C. After that, the test pieces were exposed to an atmosphere at a dew point of -20°C for 24 hours. The test pieces having been pre-treated above were measured in terms of water adsorption amount with a water vaporizer heated at 300°C by Karl Fischer coulometric titration. The titration was ended when the amount of water measured reached "background value + 0.1 $\mu$g/sec". In this way, the water adsorption amounts of the aluminum porous body 1 were measured. As a result, the aluminum porous body 1 was found to have a water adsorption amount of 8.1 mg/m$^2$, which is a small amount.

-Production of Non-Aqueous Electric Double Layer Capacitor 1-

The aluminum porous body 1 was used as a current collector and the porous portion of the current collector was filled with active carbon prepared as the active material with a planetary mixer. Thus, an electrode was produced. During the production of the electrode, drying was performed at 150°C, at 5 Torr, for 2 hours. In this way, two electrodes were produced and disposed so as to face each other with a resin separator therebetween. This structure was placed in a cell case and impregnated with a non-aqueous electrolyte that was an EC/DEC (volume ratio = 3:7) solution containing 1 mol/L LiPF$_6$ dissolved therein. A lid was placed on the case with an insulating gasket therebetween to seal the opening. Thus, a non-aqueous electric double layer capacitor 1 was produced. This non-aqueous electric double layer capacitor 1 was used and evaluated. As a result, generation of gas was not observed, which indicates that the electrodes were sufficiently dried.

[Example 2]

A carbon coating material 2 was produced as in Example 1 except that the carbon coating material had a water content of 95% by mass, and the carbon coating material 2 was used to produce a conductive resin molded body 2. The carbon coating material 2 was found to have a viscosity of 104 mPa·s. Observation of the surface of the conductive resin molded body 2 revealed sufficient formation of a dense conductive layer on the surface of the urethane foam as in the conductive resin molded body 1. The conductive layer had a thickness of 0.7 $\mu$m. In the conductive resin molded body 2, the conductive layer had a coating weight per unit area of 0.75 g/m$^2$. As in Example 1, the conductive resin molded body 2 was used to produce an aluminum porous body 2. As in Example 1, an aluminum film was formed within the molten-salt electrolytic plating solution in a relatively short time, which indicates that the electric resistance of the conductive layer was low.

[Example 3]

A carbon coating material 3 was produced as in Example 1 except that the carbon coating material had a water content of 98% by mass, and the carbon coating material 3 was used to produce a conductive resin molded body 3. The carbon coating material 3 was found to have a viscosity of 93 mPa·s. Observation of the surface of the conductive resin molded body 3 revealed formation of a 0.5-$\mu$m-thick dense conductive layer on the surface of the urethane foam. In some limited portions, the conductive layer was not formed and the urethane foam was exposed. From the viewpoint of more uniform formation of a conductive layer on the surface of the skeleton of the resin molded body, with reference to other Examples, the carbon coating material preferably has a viscosity of 100 mPa·s or more. In the conductive resin molded body 3, the conductive layer had a coating weight per unit area of 0.64 g/m$^2$. As in Example 1, this conductive resin molded body 3 was used to produce an aluminum porous body 3. The sufficient formation of an aluminum film within the molten-salt electrolytic plating solution took time, which indicates that the conductive layer had a high electric resistance. From the viewpoint of imparting more sufficient conductivity to the conductive resin molded body, with reference to other Examples, the conductive layer preferably has a coating weight per unit area of 0.70 g/m$^2$ or more.

[Example 4]

A carbon coating material 4 was produced as in Example 1 except that the carbon coating material had a water content of 86% by mass, and the carbon coating material 4 was used to produce a conductive resin molded body 4. The carbon coating material 4 was found to have a viscosity of 585 mPa·s. Observation of the surface of the conductive resin molded body 4 revealed sufficient formation of a dense conductive layer on the surface of the urethane foam as in the conductive resin molded body 1. The conductive layer had a thickness of 5 $\mu$m. In the conductive resin molded body 4, the conductive layer had a coating weight per unit area of 5.3 g/m$^2$. As in Example 1, the conductive resin molded body 4 was used to produce an aluminum porous body 4. As in Example 1, an aluminum film was formed within the molten-salt electrolytic plating solution in a short time, which indicates that the electric resistance of the conductive layer was low.

[Example 5]

A carbon coating material 5 was produced as in Example 1 except that the carbon coating material had a water content of 87% by mass, and the carbon coating material 5 was used to produce a conductive resin molded body 5. The carbon coating material 5 was found to have a viscosity of 608 mPa·s. Observation of the surface of the conductive resin molded body 5 revealed formation of a 5-$\mu$m-thick dense conductive layer on the surface of the urethane foam. In the conductive resin molded body 5, the conductive layer had a coating weight per unit area of 7.1 g/m$^2$. In this Example, observation with an optical microscope revealed, in some limited portions, breakage of the skeleton of the urethane foam and clogging of the porous portion. As in Example 1, the conductive resin molded body 5 was used to produce an aluminum porous body 5; plating deposition was also observed on the clogged area of the porous portion. From the viewpoint of suppressing breakage of the resin molded body and clogging of the porous portion with more certainty, with reference to other Examples, the carbon coating material preferably has a viscosity of 600 mPa·s or less, and the conductive layer preferably has a coating weight per unit area of 7.0 g/m$^2$ or less.

[Example 6]

-Production of Lithium Ion Capacitor 1-

The aluminum porous body 1 was used as a current collector, and the porous portion of the current collector was filled with active carbon as the positive electrode active material. Thus, a positive electrode was produced. During production of the positive electrode, drying was performed at 150°C, at 5 Torr, for 2 hours. For the negative electrode, a copper porous body was used. As the negative electrode active material, hard carbon was used. Thus, the negative electrode was produced. This negative electrode was pre-doped with lithium ions by short-circuit doping. The positive electrode and the negative electrode obtained in this way were disposed so as to face each other with a resin separator therebetween. This structure was placed in a cell case and impregnated with a non-aqueous electrolyte that was an EC/DEC (volume ratio = 3:7) solution containing 1 mol/L LiPF$_6$ dissolved therein. A lid was placed on the case with an insulating gasket therebetween to seal the opening. Thus, a lithium ion capacitor 1 was produced. This lithium ion capacitor 1 was used and evaluated. As a result, generation of gas was not observed, which indicates that the electrode was sufficiently dried.

[Comparative Example 1]

-Production of Conductive Resin Molded Body A-

A conductive resin molded body A was produced as in Example 1 except that a carbon coating material A produced as below was used as the carbon coating material.

(Production of Carbon Coating Material A)

A carbon coating material A was produced by mixing so as to contain 15% by mass of oil furnace, 4.5% by mass of polyolefin, 80% by mass of water, and 0.5% by mass of a dispersing agent as an additive. The oil furnace had an average primary particle size of 20 nm.

(Observation of Cross Section of Skeleton of Conductive Resin Molded Body A)

A cross section of the skeleton of the conductive resin molded body A obtained above was observed with an electron microscope (SEM). The result is shown in Fig. 1B. As shown in Fig. 1B, a relatively discontinuous conductive layer was formed on the surface of the skeleton of the conductive resin molded body A, that is, on the surface of the urethane foam.

-Production of Aluminum Porous Body A-

An aluminum porous body A was produced as in Example 1 except that the conductive resin molded body A was used.

(Observation of Cross Section of Skeleton of Aluminum Porous Body A)

A cross section of the skeleton of the aluminum porous body A obtained above was observed with an electron microscope (SEM). The result is shown in Fig. 2B. As shown in Fig. 2B, the hollow skeleton portion of the aluminum porous body A had a porous surface layer.

(Measurement of Water Adsorption Amount of Aluminum Porous Body A)

As in the aluminum porous body 1 in Example 1, the water adsorption amount of the aluminum porous body A was measured. As a result, the water adsorption amount of the aluminum porous body A was 28 mg/m$^2$.

-Production of Non-Aqueous Electric Double Layer Capacitor A-

A non-aqueous electric double layer capacitor A was produced as in Example 1 except that the aluminum porous bodies A were used as the current collectors. This non-aqueous electric double layer capacitor A was used and evaluated, and gas was generated. This indicates that the aluminum porous bodies A had a water adsorption amount larger than that of the aluminum porous bodies 1; accordingly, when the aluminum porous bodies A were used as the electrodes of the non-aqueous electric double layer capacitor, drying under the same drying conditions as in the aluminum porous bodies 1 was insufficient and further drying needed to be performed.

[Comparative Example 2]

-Production of Lithium Ion Capacitor A-

A lithium ion capacitor A was produced as in Example 6 except that the aluminum porous body A was used as the positive electrode current collector. This lithium ion capacitor A was used and evaluated, and gas was generated. This indicates that the aluminum porous body A had a water adsorption amount larger than that of the aluminum porous body 1; accordingly, when the aluminum porous body A was used as the electrode of the lithium ion capacitor, drying under the same drying conditions as in the aluminum porous body 1 was insufficient and further drying needed to be performed. Reference Signs List

142: separator, 143: non-aqueous electrolyte, 145: case, 146: positive electrode, 147: negative electrode, 148: lead, 149: lead

**Claims**

1. A conductive resin molded body comprising a resin molded body having a three-dimensional network structure and a conductive layer that at least contains carbon black and carboxymethylcellulose and is disposed on a surface of a skeleton of the resin molded body.

2. The conductive resin molded body according to Claim 1, wherein the conductive layer is formed by applying a carbon coating material at least containing carbon black, carboxymethylcellulose, and water to the surface of the skeleton of the resin molded body and subsequently drying the carbon coating material, and
the carbon coating material has a viscosity of 100 mPa·s or more and 600 mPa·s or less.

3. The conductive resin molded body according to Claim 1 or 2, wherein the conductive layer of the conductive resin molded body has a coating weight per unit area of 0.70 g/m$^2$ or more and 7.0 g/m$^2$ or less.

4. A structure comprising the conductive resin molded body according to Claim 1 and an aluminum film on a surface of a skeleton of the conductive resin molded body.

5. An aluminum porous body obtained by removing the conductive resin molded body from the structure according to Claim 4.

6. A method for producing an aluminum porous body, comprising a step of forming an aluminum film on a surface of a skeleton of the conductive resin molded body according to Claim 1 by molten-salt electrolytic plating to produce a structure, and
a step of removing the conductive resin molded body from the structure.

7. A current collector comprising the aluminum porous body according to Claim 5.

8. An electrode comprising the aluminum porous body according to Claim 5 as a current collector.

9. A non-aqueous electric double layer capacitor comprising the electrode according to Claim 8.

10. A lithium ion capacitor comprising the electrode according to Claim 8.

FIG. 1A

FIG. 1B

FIG. 2A

FIG. 2B

FIG. 3

## INTERNATIONAL SEARCH REPORT

| International application No. |
|---|
| PCT/JP2014/083576 |

A. CLASSIFICATION OF SUBJECT MATTER
*C22C1/08*(2006.01)i, *H01M4/80*(2006.01)i

According to International Patent Classification (IPC) or to both national classification and IPC

B. FIELDS SEARCHED

Minimum documentation searched (classification system followed by classification symbols)
C22C1/08, H01M4/80

Documentation searched other than minimum documentation to the extent that such documents are included in the fields searched
Jitsuyo Shinan Koho        1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2013-065471 A (Nissan Motor Co., Ltd.),<br>11 April 2013 (11.04.2013),<br>claims; paragraphs [0030], [0035], [0042],<br>[0045], [0052], [0053]<br>& KR 2013-0030186 A | 1-3<br>4-10 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 March 2015 (12.03.15) | 24 March 2015 (24.03.15) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (July 2009)

**REFERENCES CITED IN THE DESCRIPTION**

**Patent documents cited in the description**

- JP 2012007233 A